# EUROPÄISCHE PATENTSCHRIFT

(11) **EP 3 176 341 B1**
(45) Veröffentlichungstag und Bekanntmachung des Hinweises auf die Patenterteilung: **28.11.2018**
(21) Anmeldenummer: 15197691.7
(22) Anmeldetag: 03.12.2015
(51) Int. Cl.: E04D 13/00, G01M 3/16, E04D 13/04

(54) **FLACHDACH-EINBAUTEIL**
FLAT ROOF INSTALLATION PART
COMPOSANT DE TOIT PLAT

(43) Veröffentlichungstag der Anmeldung: 07.06.2017
(73) Patentinhaber: Fleischmann & Petschnig Dachdeckungs-Gesellschaft m.b.H., 9020 Klagenfurt (AT)
(72) Erfinder: Petschnig, Otmar, 9023 Klagenfurt (AT); Eusch, Ingram, 9500 Villach (AT); Scheiflinger, Horst, 9722 Gummern (AT)
(74) Vertreter: Schweiger, Johannes

(56) Entgegenhaltungen:
- DE-A1- 3 600 374
- DE-A1-102011 100 451
- DE-U1- 20 119 686
- FR-A1- 2 599 072
- FR-A1- 3 024 741
- US-A- 4 432 273
- US-A- 4 723 109
- US-A- 5 115 601
- US-A- 5 555 683
- US-B1- 6 225 909

## Beschreibung

Die Erfindung betrifft ein Flachdach-Einbauteil.

In die Kategorie der Flachdach-Einbauteile gehören Bauteile/Bauelemente, die nicht unmittelbar Gegenstand des Dachs selbst sind, aber als diskrete (eigenständige) Teile an einem Dach oder in einem Dach angeordnet werden. Hierzu gehören beispielsweise Gullys (Bauteile zum Wegführen von Wasser, insbesondere Regenwasser), Lichtkuppeln (zum Einsetzen in eine Dachöffnung, um Tageslicht in den darunter liegenden Raum zu bringen), Anschlagpunkte (Absturzsicherungen für Personen; auch Sekuranten genannt), Lichtkamine (kaminartige Dacheinbauten, um Tageslicht über Spiegel in den darunter liegenden Raum zu führen), Schornsteine etc.

Um diese Bauteile in ein Dach einzubauen, muss das Dach an der Einbaustelle geöffnet (unterbrochen) werden. Beispielsweise beim Einbau eines Gullys in Form eines Abflussrohrs muss das Dach mit einer entsprechenden Öffnung/Bohrung versehen werden, in die der Gully eingesetzt wird. Ein wesentliches Problem beim Einbau ist es, eine feuchtigkeitsdichte Verbindung von Einbauteil und Dach (Dachfläche, Dachaufbau) zu erreichen.

Trotz jahrzehntelanger Bemühungen sind alle auf dem Markt angebotenen Lösungen unbefriedigend. Immer wieder kommt es zu Leckagen (unbeabsichtigter Wassereintritt) im Bereich dieser Dach-Einbauteile.

Die US 5,115,601 betrifft ein Dachlicht, das mit einem Feuchtigkeitsmelder ausgebildet ist, um das Dachlicht bei Regen zu schließen. Eine generelle Leckageüberdachung des Dachs ist dabei nicht möglich.

Die DE 201 19 686 U1 betrifft eine Einrichtung zur Überwachung der Dichtigkeit von einer Abdichtung eines Flachdachs, nach dem Oberbegriff des Anspruchs 1.

Die Erfindung geht von dieser Erkenntnis aus. Insoweit geht es bei der Erfindung nicht primär um eine Verbesserungen bei der Gestaltung oder beim Einbau derartiger Einbauteile, sondern darum, eine Leckage so schnell wie möglich zu detektieren (festzustellen).

Der Grundgedanke der Erfindung besteht darin, eine entsprechende Leckage-Detektionseinrichtung unmittelbar am Einbauteil anzuordnen beziehungsweise zum integralen Bestandteil des Einbauteils zu machen. Die Einbauteile sind "Schwachstellen" bezüglich Dichtigkeit des Dachs, weil sie von außen durch die Abdichtung des Dachs und in das Dach eingeführt werden und damit den Dach-Aufbau und die Dach-Abdichtung "unterbrechen". Beispielsweise durch unterschiedliche thermische Dehnungen zwischen Bestandteilen des Dachs und dem Einbauteil kann es zu Rissen im Bereich von Dach und Einbauteil kommen. Wenn das Einbauteil selbst so ausgerüstet ist, dass eine Leckage erkannt und anzeigt wird, kann schnell und gezielt eine Reparaturmaßnahme eingeleitet werden.

Ein weiterer Gedanke besteht darin, die Feuchtigkeits-Detektionseinrichtung im Dach (im Dachaufbau) anzuordnen, wobei nachstehend folgender grundsätzlicher Dachaufbau zu Grunde gelegt wird (bei einem Flachdach, von oben nach unten betrachtet):
a) obere Dachhaut/Abdichtungsbahn (z. B. aus Blech, Bitumen, Schiefer, Kunststoff),
b) Wärmedämmung (z. B. aus Mineralwolle oder Kunststoff),
c) Dampfsperre (zum Beispiel auf Bitumenbasis)
d) Unterhalb der Dampfsperre würde sich dann der statische Teil des Dachs, beispielsweise eine Betonplatte, anschließen.

Die Erfindung lässt sich selbstverständlich analog auf Abwandlungen dieses Dachaufbaus anwenden.

Die genannten Einbauteile werden mindestens durch a) und b), oft durch alle vorgenannten Schichten des Dachs hindurchgeführt. Die Feuchtigkeits-Detektion soll vorzugsweise im Bereich der Dampfsperre erfolgen, insbesondere direkt auf (oberhalb) der Dampfsperre im Bereich des Einbauteils oder in den Nähe des Einbauteils.

Diese Position der Feuchtigkeits-Detektionseinrichtung wird deshalb gewählt, weil Feuchtigkeit (insbesondere Regenwasser), welche die obere Dachhaut passiert und in die Wärmedämmung gelangt, auf der Dampfsperre zumindest teilweise gestaut wird und dort besonders gut und sicher detektiert werden kann.

Dies gilt vor allem für ein Einbauteil in Form eines Gully, der aus einem oder mehreren rohrartigen Abschnitten besteht, um Wasser von der Dachfläche abzuleiten. Ein solcher Gully wird deshalb meist an einer tiefliegenden Stelle eines Flachdachs eingebaut; für die Erfindungsidee bedeutet das, dass eine Leckage auch festgestellt werden kann, wenn das Dach in einem Abstand neben dem Gully undicht wird, weil eingedrungenes Wasser dann in Richtung Gully fließt und dort von der Feuchtigkeits-Detektionseinrichtung des neuen Gully erkannt wird.

Der Erfindungsgedanke besteht insbesondere darin, dass die Feuchtigkeits-Detektionseinrichtung Bestandteil des Einbauteils wird und beim Einbau, bei der Reparatur oder beim Austausch des Einbauteils direkt mit eingebaut wird. Auf separate Vorrichtungen zur Anzeige von Wasserschäden kann verzichtet werden. Das hat den Vorteil, dass das Dach zum Einbau solcher Vorrichtungen nicht zusätzlich an einer anderen Stelle geöffnet werden muss.

In ihrer allgemeinsten Ausführungsform betrifft die Erfindung ein Flachdach-Einbauteil, nach Anspruch 1.

Ausgehend von einer Einbauposition (=Montageposition) des Einbauteils in einem (horizontal verlaufenden) Flachdach folgt daraus, dass die axiale Ausrichtung des Einbauteils überwiegend vertikal ist und der erste Abschnitt oben (im Bereich der Dachhaut/Abdichtungsbahn) sowie der zweite Abschnitt unten (also mit Abstand zur Dachhaut im Dach) liegt. Das Einbauteil kann die Dachhaut nach oben überragen, also über das Flachdach noch oben vorragen, es kann mit seinem unteren Abschnitt an der Dampfsperre enden oder die Dampfsperre durchdringen. Der letztgenannte Fall wird zum Beispiel bei einem Gully auftreten, da das Wasser in das Abwassersystem des Hauses abgeleitet werden muss. Auch ein Sekurant wird meist so montiert, dass das stabförmige Einbauteil bis in die statisch relevanten Schichten (wie Betonschichten) des Flachdachs reicht.

Entsprechend liegt der mittlere Abschnitt des Einbauteils zwar immer im Dach, kann aber zum Beispiel oberhalb der Dampfsperre verlaufen oder im Bereich der Dampfsperre.

Die Begriffe "erstes und zweites Ende", oben, unten etc. orientieren sich immer an der Einbauposition des Einbauteils in einem Flachdach, einschließlich Pultdach und ähnlichen Dachformen. Alle nachstehenden Ausführungen beziehen sich auf diese Montageposition, soweit nicht anders angegeben.

Die Feuchtigkeits-Detektionseinrichtung ist funktionaler Bestandteil des Einbauteils und kann technisch und konstruktiv auf unterschiedliche Art realisiert werden.

Beispielsweise umfasst die Detektionseinheit eine Messeinrichtung, mit der mindestens ein physikalischer Kennwert, wie elektrischer Widerstand, Strom, Temperatur, Spannung und/oder Leitfähigkeit in der Umgebung der Messeinrichtung und damit in der Umgebung des Einbauteils erfasst wird. Solche Messeinrichtungen sind Stand der Technik werden nachstehend nur anhand eines konkreten Ausführungsbeispiels (mit Litzen) beschrieben.

Zur Konfektionierung der Messeinrichtung kann die Detektionseinheit einen Grundkörper aufweisen, in dem mindestens ein Raum ausgebildet ist, in dem mindestens eine Messeinrichtung angeordnet ist.

Die Messeinrichtung kann Feuchtigkeit direkt oder indirekt messen. Eine Veränderung mindestens einer der genannten physikalischen Parameter gegenüber einem Referenzwert gibt schnell und zuverlässig eine entsprechende Information. Eine Leckage, also das Eindringen von Feuchtigkeit in den Dachaufbau, kann so detektiert werden. Es ist selbstverständlich, dass die Detektions-/Messeinrichtung an eine entsprechende Erfassungs- und Auswerteeinheit gekoppelt ist.

Die Messwerte können drahtgebunden oder drahtlos übermittelt werden. Die Messeinrichtung kann Funksensoren, RFID (radio frequency identification) Chips. etc für die Datenkommunikation benutzen.

Bei einer Verkabelung werden die Kabel beispielsweise an oder im Einbauteil verlegt und/oder bis zum oberen Ende des Einbauteils geführt und dort an nachgeordnete Einrichtungen angeschlossen. Die Verkabelung im oder am Einbauteil hat den Vorteil, dass keine separate Öffnung für die Durchführung der Kabel durch die Dachisolierung notwendig wird.

Mehrere der genannten Einbauteile (wie Gullys, Sekuranten), haben eine im Wesentlichen rohr-/stabartige Geometrie und einen im Wesentlichen runden horizontalen Querschnitt in der Einbauposition. Dabei kann die Feuchtigkeits-Detektionseinrichtung außen an dem Teil des Einbauteils angeordnet werden, der im Dach verläuft, beispielsweise umlaufend.

Bei einer Ausführungsform ist die Detektionseinrichtung flanschartig gestaltet und überragt den entsprechenden Abschnitt des Einbauteils radial nach außen. Dieser ringförmige Abschnitt der Detektionseinrichtung verläuft vorzugsweise parallel zur inneren Abdichtung (Dampfsperre) des Flachdachs und ist beispielsweise mit der Dampfsperre verbunden (verklebt, verschweißt).

Der ringförmige Teil der Feuchtigkeits-Detektionseinrichtung kann als mechanisch steife Scheibe oder als flexible Scheibe ausgebildet sein. Die flexible Ausführungsform kann beispielsweise aus einem Bitumenmaterial bestehen, welches mit dem Bitumen der Dampfsperre kompatibel ist, so dass sich beide gut verbinden lassen (zum Beispiel Verschweißen oder Verkleben). Die feste Variante besteht zum Beispiel aus demselben Material wie das Einbauteil.

Nach der Erfindung ist die Feuchtigkeits-Detektionseinrichtung in ihrer Position am Einbauteil verstellbar. Die Detektionseinrichtung mit der Messeinheit kann so an der Baustelle in die gewünschten Position gebracht werden. Die Detektionseinheit kann erfindungsgemäß in Führungsnuten außen am Einbaukörper verschoben und/oder verrastet werden, wie an einem Beispiel erläutert wird:
Ein oberer rohrförmiger Abschnitt eines mehrteiligen Gully verläuft von oben durch die Dachhaut, durch die Wärmedämmung und durch die Dampfsperre und ragt unterhalb der Dampfsperre in einen unteren rohrförmigen Abschnitt, dessen Innendurchmesser größer ist als der Außendurchmesser des oberer Abschnitts. Damit wird eine durchgehende strömungstechnische Verbindungen geschaffen.

Der mittlere Abschnitt des Gully wird im Bereich der Dampfsperre vom unteren Ende des oberen Abschnitts gebildet. Die Detektionseinrichtung besteht aus einem Ring mit integrierter Messvorrichtung und der Ring wird in Längsnuten am Umfang des oberen rohrförmigen Abschnitts soweit nach unten verschoben, bis er gegen die Dampfsperre anliegt (und optional mit dieser verklebt werden kann). Die Feuchtigkeits-Detektionsvorrichtung verläuft bei dieser Ausführungsform also am Übergangsbereich von einem Abschnitt zum nächsten Abschnitt des Einbauteils (Gully).

Diese Ausführungsform kann wie folgt abgewandelt oder ergänzt werden: Der untere rohrförmige Abschnitt weist an seinem oberen Ende einen nach außen vorstehenden ringförmigen Flansch auf, der oberhalb einer korrespondierenden Durchbrechung der Dampfsperre positioniert und dann mit dem radial außen folgenden Teil der Dampfsperre verbunden (zum Beispiel verschweißt) wird. Auf der freien Oberseite des Flansches kann die Feuchtigkeits-Messeinrichtung integriert werden, zum Beispiel in Form von Litzen, wie nachstehend beschrieben wird.

Nach einer Ausführungsform besteht die Messeinrichtung aus mindestens zwei elektrisch leitenden Litzen, die im Abstand zueinander angeordnet und elektrisch an eine Datenverarbeitungsanlage angeschlossen sind. Die Messeinrichtung ist geeignet, Änderungen mindestens eines physikalischen Kennwertes der Messeinrichtung, wie elektrischer Widerstand, Strom, Spannung und/oder Leitfähigkeit in den Litzen zu erfassen und auszuwerten.

Der Begriff "Litze" steht stellvertretend für drahtartige oder kabelartige Elemente, die eine elektrische Leitfähigkeit besitzen. Insbesondere definiert der Begriff "Litze" die Geometrie des Detektionselementes dahingehend, dass es sich um schmale, längliche, drahtartige Elemente handelt, deren Durchmesser beispielsweise 0,2 bis 3 mm beträgt.

Eine einzelne Litze kann aus einem oder mehreren diskreten Drähten bestehen.

Die Litzen sind an eine elektrische Stromversorgung sowie eine Auswerteeinheit angeschlossen.

Kommt es zum Eindringen von Feuchtigkeit im Bereich der Litzen verändert sich beispielsweise der elektrische Widerstand der Litze auf Grund einer elektrischen Verbindung (über die Feuchtigkeit) zwischen benachbarten Litzen. Dies wird angezeigt und entsprechend des Leckagefalls diagnostiziert.

Nach der Erfindung ist die Feuchtigkeits-Detektionsvorrichtung zumindest teilweise in Führungsnuten außen am Einbauteil angeordnet.

Die Litzen können ebenfalls in korrespondierenden Nuten des Grundkörpers einer Detektionsvorrichtung konfektioniert werden. Die Litzen behalten dabei sicher ihre jeweilige Position und Fehldetektionen werden vermieden.

Durch Verbindungsnuten zwischen den Nuten, in denen die Litzen verlaufen, kann eine zusätzlich elektrische Verbindung zwischen benachbarten Litzen erreicht werden, wenn Flüssigkeit in den Verbindungsnuten eine elektrische Brücke bildet.

Ebenso kann eine flexible Trägerfolie als Grundkörper für die Messeinrichtung benutzt werden.

Eine Variante sieht vor, zumindest einen Abschnitt der Feuchtigkeits-Detektionseinrichtung als perforierte Scheibe zu gestalten. Dies gilt insbesondere für eine scheiben- oder plattenartige Ausbildung der Detektionseinrichtung an dem Abschnitt des Einbauteils, der auf der Dampfsperre des Daches aufliegt. Der Begriff "Perforation" inkludiert sämtliche Ausführungsformen, bei denen Flüssigkeit durch die Poren/Öffnungen zum Beispiel durch Kapillarwirkung angesaugt wird, und zwar in den Bereich der Detektions-/Messcinrichtung, also beispielsweise der genannten Litzen.

Grundsätzlich sind Ausführungsformen bevorzugt, bei denen die Feuchtigkeits-Detektionsvorrichtung integraler Bestandteil des Einbauteils ist. Das schließt Varianten ein, bei denen die Feuchtigkeits-Detektionsvorrichtung beweglich oder abnehmbar am Einbauteil befestigt ist.

Neben einem Gully als Einbauteil können unter allem folgende Einbauteile in der beschriebenen Form realisiert werden: Lichtkuppel, Anschlagpunkt (Sekurant), Lichtkamin, Schornstein.

In allen Fällen kann die Feuchtigkeits-Detektionsvorrichtung beispielsweise wie folgt am Einbauteil positioniert werden:
- in einem Flanschbereich am oberen Ende des unteren Abschnitts.

Das Einbauteil kann ein Kunststoff-Spritzgussteil, ein metallisches Gussteil oder ein Betonteil sein. Die Größe und Bauform ist grundsätzlich beliebig.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert. Die Figuren sind rein schematisch, um die Darstellung der Erfindungsmerkmale zu erleichtern.

Dabei zeigen:
- Figur 1:: einen Schnitt durch ein Flachdach mit einem eingebauten Gully in einer 1. Ausführungsform,
- Figur 2:: einen Schnitt durch ein Flachdach mit einem eingebauten Gully in einer 2. Ausführungsform,
- Figur 3:: Eine Explosionsdarstellung einer Feuchtigkeits-Detektionseinrichtung zum Gully gemäß Fig. 1
- Figur 4:: Einen Schnitt durch eine Lichtkuppel als Einbauteil mit Feuchtigkeits-Detektionseinrichtung

In den Figuren sind gleiche oder gleichwirkende Bauteile mit gleichen Bezugsziffern dargestellt.

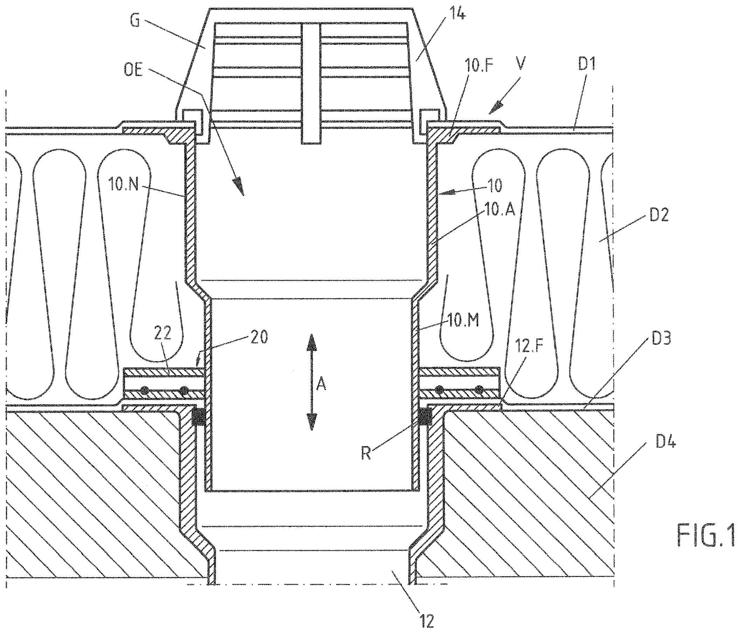

Figur 1 zeigt schematisch einen Flachdach-Aufbau, mit einer oberen Dachhaut D1, einer darunter liegenden Wärmedämmung D2 und einer darunter angeordneten Dampfsperre D3, die auf einer Betondecke D4 verläuft.

In diesem Flachdach ist ein Gully G als Flachdach-Einbauteil installiert, und wie folgt aufgebaut:
- Der Gully ist in eine Öffnung OE des Flachdachs eingesetzt,
- Der Gully weist einen ersten rohrförmigen Abschnitt 10 auf, der in der dargestellten Einbauposition des Gullys einen oberen Abschnitt (Sektor) des Gullys bildet und mit der Dachhaut 1 bei V verklebt ist. Die als Bitumenbahn ausgeführte Dachhaut D1 ist dazu über einen umfangsseitigen Flansch 10.F am oberen Ende des Gullys gelegt und mit dem Flansch 10.F verklebt.
- Der Gully hat einen zweiten rohrförmigen Abschnitt, der in der Einbauposition einen unteren Abschnitt 12 des Einbauteils bildet und im Flachdach verläuft, nämlich durch die Betondecke D4 nach unten. Ein äußerer Flansch 12.F am oberen Ende des Abschnitts 12 ist (analog zum Flansch 10.F) mit der Dampfsperre, hier in Form einer Kunststofffolie, verschweißt.
- Der rohrförmige obere Abschnitt 10 ist nach unten hin verjüngt, wobei dieser Teil einen mittleren Abschnitt 10.M bildet, der in den zweiten, unteren Abschnitt 12 hineinragt. Eine Ringdichtung R zwischen den Abschnitten 10.M und 12 positioniert die Teile 10, 12 zueinander.
- Der mittlere Abschnitt 10.M weist oberhalb der Dichtung R und damit oberhalb des Flanschs 12.F einen radial nach außen vorstehenden Kragen 22 auf, der Bestandteil einer Feuchtigkeits-Detektionseinrichtung 20 ist. Der Kragen 22 ist entlang von zwei axial (Pfeil A) verlaufenden Nuten 10.N in der Außenwand 10.A des Abschnitts 10 axial verschiebbar und hier so weit nach unten verschoben, dass er auf dem Teil der Dampfsperre D3 aufliegt, die mit dem Flansch 12.F verklebt ist.
- Von oben ist der Gully mit einem topfartigen Gitter 14 abgedeckt. Durch die Gitteröffnungen kann Wasser in die Abschnitte 10, 12 fließen.

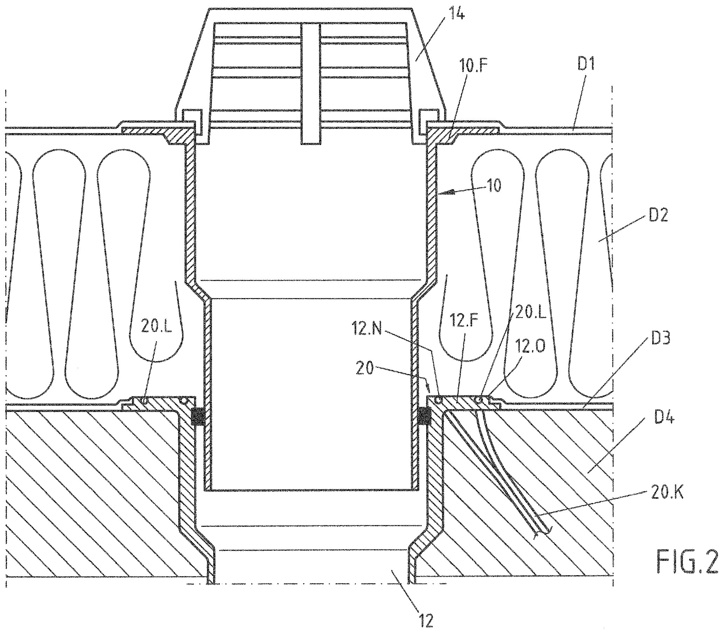

Der Gully gemäß Fig. 2 unterscheidet sich von der Ausführungsform nach Fig.1 im Wesentlichen wie folgt:
- Die Feuchtigkeits-Detektionsvorrichtung 20 ist im Flansch 12.F des unteren Gully-Abschnitts 12 angeordnet, und zwar in Nuten 12.N auf der Oberseite 12.0 des Flansches 12.F.
- In den Nuten 12.N, die mit Abstand zueinander angeordnet sind, verlaufen elektrisch leitende, nicht isolierte Drähte (Litzen) 20.L, an die sich Kabel 20.K anschließen.
- Die Kabel 20.K verlaufen von der Detektionseinrichtung 20 durch die Betondecke D4 zu einem Verteilerpunkt (nicht dargestellt)

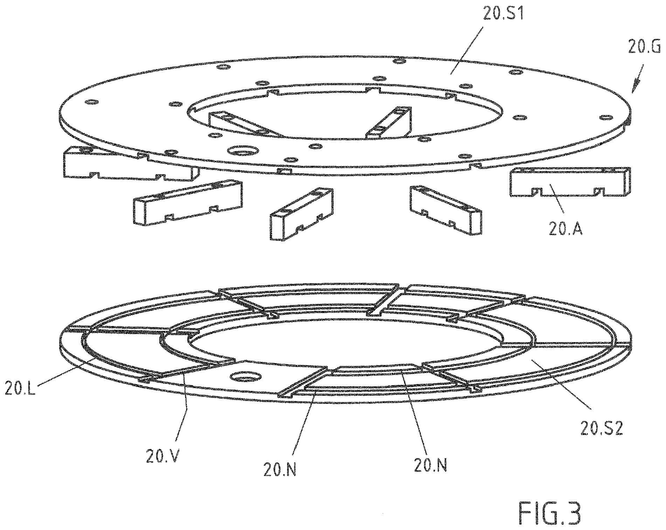

Die Feuchtigkeits-Detektionsvorrichtung gemäß Fig. 1 ist in Figur 3 im Detail dargestellt.

Sie besteht aus einem Grundkörper 20.G, der eine obere ringförmige Scheibe 20.S1 und eine untere ringförmige Scheibe 20.S2 aufweist, die durch Abstandhalter 20.A vertikal voneinander getrennt sind. Zwischen den Scheiben 20.S1, 20.S2 entsteht dadurch ein Raum R, der radial nach außen offen ist (so dass Feuchtigkeit in den Raum R zwischen den Scheiben 20.S1, 20.S2 fließen kann). Die obere Scheibe 20.S1 kann zu diesem Zweck auch zusätzliche Perforationen/Löcher aufweisen.

Die untere ringförmige Scheibe 20.S2 weist ringförmig verlaufende Nuten 20.N auf ihrer Oberseite auf, in denen elektrisch leitfähige Litzen 20.L beabstandet zueinander verlaufen. Die Litzen 20.L verlaufen von der Scheibe 20.S2 in Nuten 10.N auf der Außenwand 10.A des Abschnitts 10 nach oben und über die Dachhaut D1 hinaus, wo sie an eine entsprechende Auswerteeinheit angeschlossen werden.

Die konzentrisch zueinander verlaufenden Nuten 20.N sind durch senkrecht dazu verlaufende Verbindungsnuten 20.V miteinander verbunden.

Die untere ringförmige Schreibe 20.S2 ist gemäß Figur 1 unmittelbar auf der Dampfsperre D3 positioniert.

Kommt es im Bereich des Gullys G zum Eindringen von Feuchtigkeit (insbesondere Regenwasser) in den Bereich der Wärmedämmung D2 so erreicht diese Feuchtigkeit anschließend den Bereich der Dampfsperre D3 und damit den Bereich der Detektionseinrichtung 20.

Während im Normalfall die Litzen 20.L beabstandet zueinander und insofern elektrisch getrennt verlaufen, führt Feuchtigkeit im Bereich der unteren ringförmigen Scheibe 20.S2 zu einer elektrischen Verbindung zwischen den (nicht isolierten) Litzen 20.L, beispielsweise durch Flüssigkeit in den Verbindungsnuten 20.V. Dabei verändert sich der elektrische Widerstand der Litzen 20.L. Das wird in einer zugeordneten (nicht dargestellten) Registrier- und Auswerteeinheit erfasst und signalisiert.

Analog gilt dies für den Gully nach Fig. 2, wobei der Flansch 12.F ähnlich der Scheibe 20.S2 in Fig. 3 gestaltet ist.

Durch die integrale Ausbildung des Einbauteils (Gullys) mit der Detektionseinrichtung vereinfacht sich nicht nur die Anordnung einer Feuchtigkeits-Detektionseinrichtung im Dach, sondern die Ansprechzeit zur Detektion einer Leckage wird deutlich verkürzt. Schäden können sofort registriert und behoben werden.

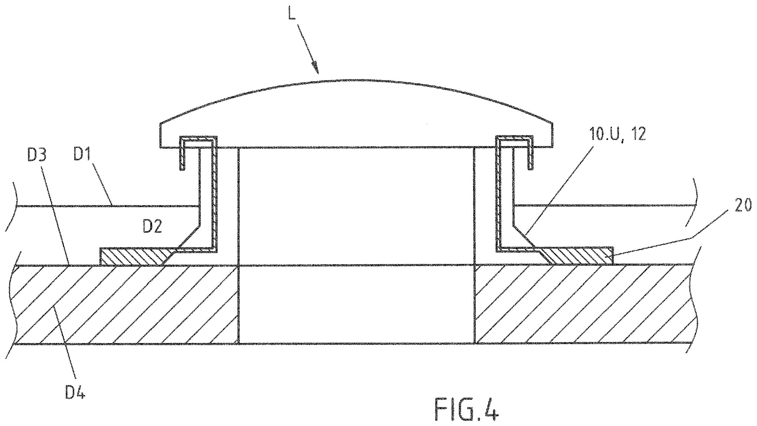

Figur 4 zeigt eine Lichtkuppel L als Einbauteil, die in ein Dach eingebaut ist. Der Dachaufbau ist analog dem in Figur 1.

Bei diesem Beispiel wird der untere Abschnitt 12 des Einbauteils vom unteren Ende 10.U des oberen Abschnitts 10 gebildet. An diesem unteren Ende 10.U des Abschnitts 10 der Lichtkuppel L ist ähnlich wie beim Ausführungsbeispiel nach Figur 1 eine Feuchtigkeits-Detektionseinrichtung 20 angeordnet. Die Detektionseinrichtung 20 ist außen am Abschnitt 10.U/12 der Lichtkuppel L befestigt ist und verläuft flanschartig um diesen Teil herum (ähnlich wie bei Figur 1).

Die Detektionseinrichtung 20 kann wie zu den Figuren 1 bis 3 erläutert ausgebildet sein.

## Patentansprüche

1. Flachdach-Einbauteil, das in eine Öffnung (OE) eines Flachdachs einsetzbar ist, mit folgenden Merkmalen:
1.1 einem ersten Abschnitt (10), der in einer Einbauposition des Einbauteils einen oberen Abschnitt des Einbauteils bildet und mit einer äußeren Abdichtung (D1) des Flachdachs verbindbar ist,
1.2 einem zweiten Abschnitt (12), der in einer Einbauposition des Einbauteils einen unteren Abschnitt des Einbauteils bildet und im Flachdach verläuft,
1.3 einem, zwischen dem ersten, oberen Abschnitt (10) und dem zweiten, unteren Abschnitt (12) verlaufenden mittleren Abschnitt (10.M),
1.4 einer, am mittleren Abschnitt (10.M) und/oder am unteren Abschnitt (12) am Einbauteil positionierten und in ihrer Position am Einbauteil verstellbar ausgebildeten Feuchtigkeits-Detektionseinrichtung (20), **dadurch gekennzeichnet, dass**
1.5 die Feuchtigkeits-Detektionseinrichtung (20) in Führungsnuten außen am Einbauteil verschiebbar und/oder verrastbar ist.

2. Flachdach-Einbauteil gemäß Anspruch 1, bei dem die Feuchtigkeits-Detektionseinrichtung (20) außen am mittleren Abschnitt (10.M) und/oder außen am unteren Abschnitt (12) am Einbauteil positioniert ist.

3. Flachdach-Einbauteil gemäß Anspruch 1, bei dem die Feuchtigkeits-Detektionseinrichtung (20) einen Grundkörper (20.G) aufweist, in dem mindestens ein Raum (R) ausgebildet, in dem mindestens eine Messeinrichtung angeordnet ist, mit der mindestens ein physikalischen Kennwert, wie elektrischer Widerstand, Temperatur, Strom, Spannung und/oder Leitfähigkeit erfasst wird.

4. Flachdach-Einbauteil gemäß Anspruch 1, bei dem die Feuchtigkeits-Detektionseinrichtung (20) das Einbauteil ringartig umgibt und in der Einbauposition des Einbauteils im Wesentlichen parallel zu einer inneren Abdichtung (D3) des Flachdachs verläuft.

5. Flachdach-Einbauteil gemäß Anspruch 1, bei dem die Feuchtigkeits-Detektionsvorrichtung (20) Bestandteil eines radial nach außen verlaufenden Flansches (12.F) des Einbauteils ist.

6. Flachdach-Einbauteil gemäß Anspruch 1, bei dem die Feuchtigkeits-Detektionsvorrichtung (20) zumindest teilweise in einer oder mehreren Nuten (10.N, 12.N) außen am Einbauteil angeordnet ist.

7. Flachdach-Einbauteil gemäß Anspruch 1, bei dem die Feuchtigkeits-Detektionseinrichtung (20) in einer Einbauposition des Einbauteils auf einer inneren Abdichtung (D3) des Flachdachs verläuft.

8. Flachdach-Einbauteil gemäß Anspruch 1, das aus mehreren Teilen (10, 12, 14) besteht, wobei die Feuchtigkeits-Detektionsvorrichtung (20) im Übergangsbereich von einem Teil (10) zum nächsten Teil (12) angeordnet ist.

9. Flachdach-Einbauteil gemäß Anspruch 1, bei dem die Feuchtigkeits-Detektionsvorrichtung (20) integraler Bestandteil des Einbauteils ist.

10. Flachdach-Einbauteil gemäß Anspruch 1, bei dem die Feuchtigkeits-Detektionsvonichtung (20) abnehmbar am Einbauteil befestigt ist.

11. Flachdach-Einbauteil gemäß Anspruch 1, bei dem die Feuchtigkeits-Detektionseinrichtung (20) mindestens zwei elektrisch leitende Litzen (20.L) aufweist, die im Abstand zueinander angeordnet und elektrisch an eine Datenverarbeitungsanlage angeschlossen sind, die geeignet ist, Veränderungen mindestens eines physikalischen Kennwerts, wie elektrischer Widerstand, Temperatur, Strom, Spannung und/oder Leitfähigkeit in den Litzen () zu erfassen und auszuwerten.

12. Flachdach-Einbauteil nach einem der Ansprüche 1-11 aus der Gruppe: Gully (G), Lichtkuppel (L), Anschlagpunkt, Lichtkamin, Schornstein.

13. Flachdach-Einbauteil nach Anspruch 12 in Form eines mehrteiligen Gullys (G), bei dem ein mittlerer Abschnitt (10.M) von einem unteren Ende des oberen Abschnitts (10) und/oder von einem oberen Ende des unteren Abschnitts (12) gebildet wird, die so zueinander angeordnet sind, dass eine durchgehende strömungstechnische Verbindungen entsteht.

14. Flachdach-Einbauteil nach Anspruch 13 in Form eines mehrteiligen Gullys (G), bei dem die Feuchtigkeits-Detektionsvorrichtung (20) wie folgt positioniert ist:
14.1 in einem Flanschbereich (12.F) am oberen Ende des unteren Abschnitts (12),
14.2 in einem Flanschbereich am unteren Ende des oberen Abschnitts (10),
14.3 verstellbar entlang des Außenumfangs des oberen Abschnitts (10).

## Claims

1. A flat roof fitted part, which can be inserted into an opening (OE) of a flat roof, having the following features:
1.1 a first section (10), which forms an upper section of the fitted part in a fitted position of the fitted part and can be connected to an outer seal (D1) of the flat roof,
1.2 a second section (12), which forms a lower section of the fitted part in a fitted position of the fitted part and runs in the flat roof,
1.3 a central section (10.M) running between the first, upper section (10) and the second, lower section (12),
1.4 a moisture detection device (20), which is positioned on the central section (10.M) and/or on the lower section (12) on the fitted part and constructed such that it can be adjusted in terms of its position on the fitted part,
**characterized in that**
1.5 the moisture detection device (20) can be displaced and/or latched in guide grooves on the outside of the fitted part.

2. The flat roof fitted part according to Claim 1, in which the moisture detection device (20) is positioned on the fitted part on the outside of the central section (10.M) and/or on the outside of the lower section (12).

3. The flat roof fitted part according to Claim 1, in which the moisture detection device (20) has a base body (20.G), in which at least one space (R) is constructed, in which at least one measuring device is arranged, using which at least one physical characteristic value, such as the electrical resistance, temperature, current, voltage and/or conductivity, is detected.

4. The flat roof fitted part according to Claim 1, in which the moisture detection device (20) surrounds the fitted part in a ring-like manner and runs substantially parallel to an inner seal (D3) of the flat roof in the fitted position of the fitted part.

5. The flat roof fitted part according to Claim 1, in which the moisture detection device (20) is a constituent of a radially outwardly running flange (12.F) of the fitted part.

6. The flat roof fitted part according to Claim 1, in which the moisture detection device (20) is arranged at least partially in one or more grooves (10.N, 12.N) on the outside of the fitted part.

7. The flat roof fitted part according to Claim 1, in which the moisture detection device (20) runs on an inner seal (D3) of the flat roof in a fitted position of the fitted part.

8. The flat roof fitted part according to Claim 1, which consists of a plurality of parts (10, 12, 14), wherein the moisture detection device (20) is arranged in a transition region from one part (10) to the next part (12) .

9. The flat roof fitted part according to Claim 1, in which the moisture detection device (20) is an integral constituent of the fitted part.

10. The flat roof fitted part according to Claim 1, in which the moisture detection device (20) is fastened on the fitted part in a removable manner.

11. The flat roof fitted part according to Claim 1, in which the moisture detection device (20) has at least two electrically conductive cores (20.L), which are arranged spaced from one another and electrically connected to a data-processing system, which is suitable for detecting and analysing changes of at least one physical characteristic value, such as electrical resistance, temperature, current, voltage and/or conductivity in the cores ().

12. The flat roof fitted part according to one of Claims 1-11 from the group: gulley (G), roof-light dome (L), mounting point, light chimney, chimney.

13. The flat roof fitted part according to Claim 12 in the form of a multi-part gulley (G), in which a central section (10.M) is formed by a lower end of the upper section (10) and/or by an upper end of the lower section (12), which are arranged in such a manner with respect to one another, that a continuous fluidic connection is created.

14. The flat roof fitted part according to Claim 13 in the form of a multi-part gulley (G), in which the moisture detection device (20) is positioned as follows:
14.1 in a flange region (12.F) at the upper end of the lower section (12),
14.2 in a flange region at the lower end of the upper section (10),
14.3 in an adjustable manner along the outer circumference of the upper section (10).

## Revendications

1. Elément de montage à toit plat, qui peut être inséré dans une ouverture (OE) d'un toit plat, avec les caractéristiques suivantes :
1.1 une première section (10), qui forme dans une position de montage l'élément de montage une section supérieur de l'élément de montage et peut être reliée avec une étanchéification extérieure (D1) du toit plat,
1.2 une deuxième section (12), qui forme dans une position de montage de l'élément de montage une section inférieure de l'élément de montage et passe dans le toit plat,
1.3 une section centrale (10.M) passant entre la première section supérieure (10) et la deuxième section inférieure (12),
1.4 un dispositif de détection d'humidité positionné sur la section centrale (10.M) et/ou sur la section inférieure (12) sur l'élément de montage et constitué réglable dans sa position sur l'élément de montage, **caractérisé en ce que**
1.5 le dispositif de détection d'humidité (20) peut être déplacé et/ou encliqueté dans des rainures de guidage à l'extérieur sur l'élément de montage.

2. Elément de montage à toit plat selon la revendication 1, pour lequel le dispositif de détection d'humidité (20) est positionné sur l'élément de montage à l'extérieur sur la section centrale (10.M) et/ou à l'extérieur sur la section inférieure (12).

3. Elément de montage à toit plat selon la revendication 1, pour lequel le dispositif de détection d'humidité (20) comporte un corps de base (20.G) dans lequel au moins un espace (R) est constitué dans lequel au moins un dispositif de mesure est disposé avec lequel au moins une valeur caractéristique physique est saisie, comme la résistance électrique, la température, le courant, la tension et/ou la conductibilité.

4. Elément de montage à toit plat selon la revendication 1, pour lequel le dispositif de détection d'humidité (20) entoure de forme annulaire l'élément de montage et passe dans la position de montage de l'élément de montage pour l'essentiel parallèle à une étanchéification intérieure (D3) du toit plat.

5. Elément de montage à toit plat selon la revendication 1, pour lequel le dispositif de détection d'humidité (20) est un élément constitutif d'une bride (12.F) de l'élément de montage, passant radialement vers l'extérieur.

6. Elément de montage à toit plat selon la revendication 1, pour lequel le dispositif de détection d'humidité (20) est disposé au moins en partie dans une ou plusieurs rainures (10.N, 12.N) à l'extérieur sur l'élément de montage.

7. Elément de montage à toit plat selon la revendication 1, pour lequel le dispositif de détection d'humidité (20) passe dans une position de montage de l'élément de montage sur une étanchéification intérieure (D3) du toit plat.

8. Elément de montage à toit plat selon la revendication 1, composé de plusieurs parties (10,12,14), pour lequel le dispositif de détection d'humidité (20) étant disposé dans une zone de transition d'une partie (10) à la partie suivante (12).

9. Elément de montage à toit plat selon la revendication 1, pour lequel le dispositif de détection d'humidité (20) constitue une partie intégrante de l'élément de montage.

10. Elément de montage à toit plat selon la revendication 1, pour lequel le dispositif de détection d'humidité (20) est fixé sur l'élément de montage, pouvant être enlevé.

11. Elément de montage à toit plat selon la revendication 1, pour lequel le dispositif de détection d'humidité (20) comporte au moins deux cordons électroconducteurs (20.L), qui sont disposés à distance l'un de l'autre et connectés électriquement à une installation de traitement de données, qui est conçue pour saisir et exploiter des variations au moins d'une valeur caractéristique physique comme la résistance électrique, la température, le courant, la tension et/ou la conductibilité dans les cordons ().

12. Elément de montage à toit plat selon l'une quelconque des revendications 1-11, du groupe : bouche d'égout (G), lumidôme (L), point de butée, cheminée de lumière, cheminée.

13. Elément de montage à toit plat selon la revendication 12, sous la forme d'une bouche d'égout en plusieurs parties (G), pour lequel une section centrale (10.M) est formée d'une extrémité inférieure de la section supérieure (10) et/ou d'une extrémité supérieure de la section inférieure (12), qui sont disposées l'une par rapport à l'autre de telle manière qu'une liaison traversante relative à la technique des fluides est créée.

14. Elément de montage à toit plat selon la revendication 13, sous la forme d'une bouche d'égout en plusieurs parties (G), pour lequel le dispositif de détection d'humidité (20) est positionné comme suit :
14.1 dans une zone de bride (12.F) sur l'extrémité supérieure de la section inférieure (12),
14.2 dans une zone de bride sur l'extrémité inférieure de la section supérieure (10),
14.3 réglable le long de la périphérie extérieure de la section supérieure (10).
